# EUROPÄISCHE PATENTSCHRIFT

(11) **EP 1 504 643 B1**
(45) Veröffentlichungstag und Bekanntmachung des Hinweises auf die Patenterteilung: **06.12.2006**
(21) Anmeldenummer: 04018252.9
(22) Anmeldetag: 02.08.2004
(51) Int. Cl.: A01C 17/00

(54) **Zentrifugaldüngerstreuer**
centrifugal fertilizer spreader
Epandeur centrifuge pour engrais

(30) Priorität: 05.08.2003 DE 10335764
(43) Veröffentlichungstag der Anmeldung: 09.02.2005
(73) Patentinhaber: Amazonen-Werke H. Dreyer GmbH & Co. KG, 49205 Hasbergen (DE)
(72) Erfinder: Fölster, Nils, 49504 Lotte (DE)

(56) Entgegenhaltungen:
- EP-A- 0 403 780
- EP-A- 0 963 690
- EP-A- 1 008 288

## Beschreibung

Die Erfindung betrifft einen Zentrifugaldüngerstreuer gemäß des Oberbegriffes des Patentanspruches 1.

Ein derartiger Zentrifugaldüngerstreuer ist beispielsweise in der europäischen Patentschrift 0 403 780 B1 beschrieben. Bei diesem Zentrifugaldüngerstreuer wird das Rührorgan mittels eines Hydraulikmotors angetrieben. In der Antriebsverbindung zwischen dem Hydraulikmotor und der Antriebswelle des Querförderers ist eine Rutschkupplung angeordnet. Hierdurch wird erreicht, dass der Querförderer in Abhängigkeit von dem Füllstand des Streugutes oberhalb der Querförderers angetrieben wird.

In der europäischen Patentanmeldung 1 008 288 A2 ist ein weiterer Zentrifugaldüngerstreuer beschrieben. Die Schleuderscheibe wird über einen mechanischen Antrieb angetrieben. Der Schleuderscheibenantriebswelle ist ein Drehmomentsensor zugeordnet, über den das Antriebsmoment für den Streuteller erfasst wird. Über die Erfassung des Drehmomentes lässt sich in Verbindung mit anderen Parametern der aktuelle Massenstrom, d.h. die Ausbringmenge ermitteln.

Der Erfindung liegt die Aufgabe zugrunde, eine einfache Möglichkeit zur Ermittlung und Berücksichtigung der verschiedenen physikalischen Eigenschaften der verschiedenen Dünger für die Einstellung des Düngerstreuers aufzuzeigen und hier eine mit einfachen Mitteln zu praktizierende Lösung vorzuschlagen.

Diese Aufgabe wird erfindungsgemäß durch das kennzeichnende Merkmal des Patentanspruches 1 gelöst. Infolge dieser Maßnahme wird das Drehmoment, welches zum Antrieb der Rührwelle erforderlich ist, gemessen. Bei einem Zweischeibendüngerstreuer, der zwei Auslauftrichter aufweist, in welchem die Rührwelle mit dem jeweiligen Rührorgan angeordnet ist, kann das gesamte Drehmoment oder das für das jeweilige Rührorgan erforderliche Drehmoment ermittelt werden. Über das erforderliche Drehmoment in dem jeweiligen Auslauftrichter zum Antrieb des Rührorgans lassen sich Rückschlüsse auf die "Stumpfheit" des Düngers als pauschale Größe ziehen. Dieses Drehmoment ist ein integrales Maß für die innere und äußere Reibung des Düngers. Die hieraus gewonnenen Informationen können zur Einstellung des Düngerstreuers hinsichtlich der Ausbringmenge und Arbeitsbreite sowie Streugleichmäßigkeit genutzt werden.

Diese gewonnenen Informationen können zur Einstellung der Form und Lage der Auslauföffnung in Bezug auf die Drehachse der Schleuderscheibe sowie des Aufgabepunktes bzw. der Aufgabefläche des Düngers auf der Schleuderscheibe genutzt werden.

Eine vorteilhafte Anordnung der Kraft- und Drehmomentmesseinrichtung wird dadurch erreicht, dass zwischen der Kraftquelle und der Rührwelle die Kraft- und/oder Drehmomentmesseinrichtung angeordnet ist.

In einer Ausführungsform ist vorgesehen, dass der das Rührorgan antreibenden Kraftquelle die Kraft- und/oder Drehmomentmesseinrichtung zugeordnet ist.

Um in einfacher Weise die von der Drehmomentmesseinrichtung gelieferten Impulse auswerten zu können, ist vorgesehen, dass das die Kraft- und/oder Drehmomentmesseinrichtung mit einer elektronischen Auswerteeinrichtung, beispielsweise einem Bordcomputer oder einem anderen geeigneten elektronischen Einrichtung verbunden ist.

Zur Auswertung der von der Kraft- und Drehmomentmesseinrichtung gelieferten Daten ist vorgesehen, dass in einem Speichermedium der Kraft- und/oder Drehmomentmesseinrichtung, des Bordcomputers oder einer anderen geeigneten elektronischen Einrichtung ein Auswerteprogramm zur Ermittlung des Drehmomentes hinterlegt ist.

Eine einfache Auswertung kann dadurch erreicht werden, dass in dem Bordrechner oder einer anderen geeigneten elektronischen Einrichtung in einem Speichermedium die Zusammenhänge zwischen Antriebsmoment und Einstellwerten des Düngerstreuers hinterlegt sind und dass anhand dieser Zusammenhänge die Dosierorgane einstellbar sind.

Um eine automatische Einstellung des Schleuderdüngerstreuers zu erreichen, ist vorgesehen, dass in dem Speichermedium des Bordrechners die einzelnen Einstellparameter zu verschiedenen Antriebsmomenten abgespeichert sind, dass aufgrund der ermittelten Antriebsmomente die einzelnen Einstellparameter des Düngerstreuers ermittelbar sind und aufgrund der ermittelten Einstellparameter die Einstellorgane des Düngerstreuers von dem Bordrechner ansteuerbar sind.

Eine einfache preiswerte Einstellung des Schleuderdüngerstreuers lässt sich auch dadurch erreichen, dass die von der Kraft- und Drehmomentmesseinrichtung ermitteln und in einer geeigneten elektronischen Einrichtung ausgewerteten Messwerte auf eine Anzeigevorrichtung anzeigen. Aufgrund dieser angezeigten Werte kann dann der Bediener den Schleuderdüngerstreuer entsprechend einstellen. Auch ist es möglich, das ein Beratungsteam aufgrund der ermittelten Werte oder anhand der ermittelten Werte vorgibt, in welcher Weise der Schleuderdüngerstreuer bei welchem ermittelten Wert ein ist. Diese Werte können beispielsweise H zustellen auch in einer sogenannten Streutabelle oder Bedienungsanleitung angegeben sein, wobei dann den entsprechenden Werten entsprechende Einstellwerte für den Schleuderdüngerstreuer zugeordnet sind.

Weitere Einzelheiten der Erfindung sind der Beispielsbeschreibung und den Zeichnungen zu entnehmen.

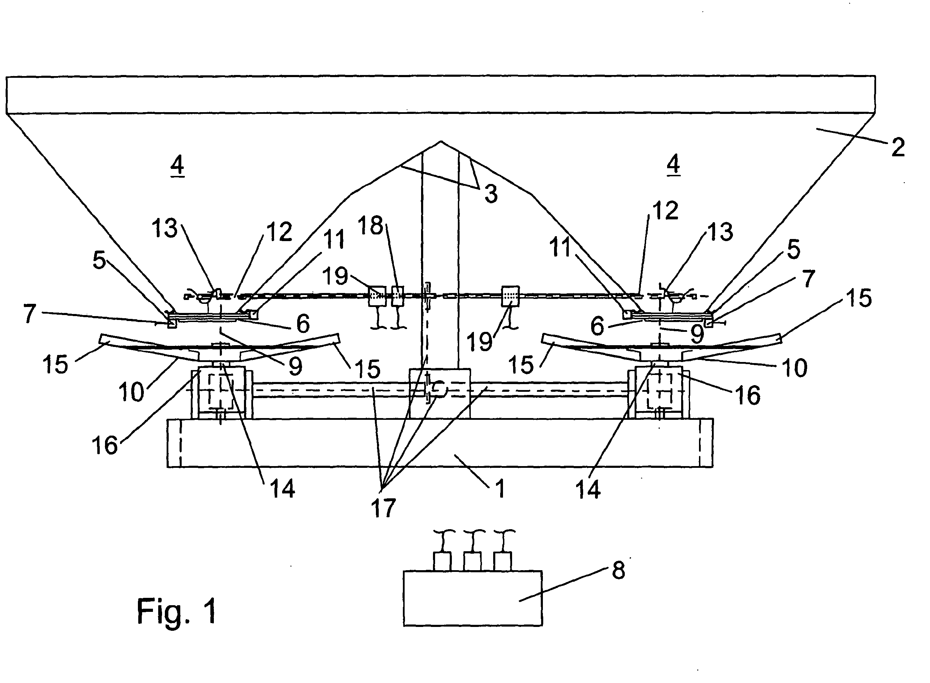

Hierbei zeigen
- Fig. 1: einen Schleuderdüngerstreuer in der Ansicht von hinten, in Prinzipdarstellung mit der Anordnung der Kraft- bzw. Drehmomentmesseinrichtung des Rührorgans,
- Fig. 2: für ein Flussdiagramm die Auswertung der von den Sensoren ermittelten Daten und die Einstellung des Düngerstreuers und,
- Fig. 3: einen weiteren Düngerstreuer mit der Anordnung der Sensoren an dem Rührorgan.

Der Zentrifugaldüngerstreuer weist den Rahmen 1 und den Vorratsbehälter 2 auf. Der Vorratsbehälter 2 ist durch ein dachförmiges Mittelteil 3 in zwei Auslauftrichter 4 unterteilt, die jeweils durch ein Dosierorgan 5 abgeschlossen werden. Diese Dosierorgane 5 sind als mittels eines Schiebers 6 einstellbare Auslauföffnungen ausgebildet. Der Schieber 6 ist mittels eines motorischen Einstellelementes 7 verstellbar und wird von einer als Bordcomputer ausgebildeten Steuer- und Regeleinrichtung 8 angesteuert. Des weiteren ist das Dosierorgan 5 in Bezug auf die Drehachse 9 der Schleuderscheibe 10 in nicht dargestellter Weise mittels eines motorischen Einstellelementes 11 einstellbar.

In den unteren Bereich der Auslauftrichter 4 ragt die Rührwelle 12 mit den darauf angeordneten Rührorganen 13 in den Vorratsbehälter 2 hinein. Das Rührorgan 13 befindet sich in geringem Abstand oberhalb der Auslauföffnung des Dosierorgans 5.

Unterhalb der Dosierorgane 5 sind die um die aufrechte Drehachsen 9 rotierend angetriebenen Schleuderscheiben 10 auf Schleuderscheibenantriebswellen 14 angeordnet. Auf den Schleuderscheiben 10 sind die als Wurfelemente ausgebildeten Wurfschaufeln 15 angeordnet, die das Material in Breitverteilung verteilen. Die Schleuderscheibenantriebswellen 14 sind in einem Getriebegehäuse 16 gelagert und werden über den Antriebsstrang 17 von der Schlepperzapfwelle angetrieben. Des weiteren wird über diesen Antriebsstrang die Rührwelle 12 angetrieben. Der Rührwelle 12 sind ein Drehzahlaufnehmer 18 und zwei Drehmomentmesseinrichtungen 19 zugeordnet. Die Drehmomentmesseinrichtungen 19 und der Drehzahlaufnehmer 18 sind über geeignete Übertragungseinrichtungen mit der elektronischen Steuer- und Regelungseinrichtung 8, die beispielsweise als Bordcomputer ausgebildet sein kann, verbunden.

Die Kraft- und Drehmomentmesseinrichtung 19 ist zwischen der Kraftquelle und der Rührwelle 12 angeordnet, um die an der Rührwelle 12 auftretenden Drehmomente aufzunehmen. In dem Bordcomputer 8 ist in dem Speichermedium ein Auswerteprogramm zur Ermittlung des Drehmomentes hinterlegt. Hier sind die Zusammenhänge zwischen Antriebsmoment und Einstellwerte des Düngerstreuers hinterlegt und anhand dieser Zusammenhänge können die Dosierorgane 5 mittels der motorischen Einstellmittel eingestellt werden und zwar hinsichtlich der Ausbringmenge und der Lage und Form der Aufgabeflächen des auszubringenden Gutes auf der Schleuderscheibe 10. Hierbei sind in dem Speichermedium des Bordrechners 8 die einzelnen Einstellparameter zu verschiedenen Antriebsmomenten abgespeichert und aufgrund der ermittelten Antriebsmomente sind die einzelnen Einstellparameter des Düngerstreuers ermittelbar und aufgrund der ermittelten Einstellparameter sind die Einstellorgane des Düngerstreuers von dem Bordrechner 8 ansteuerbar und einstellbar.

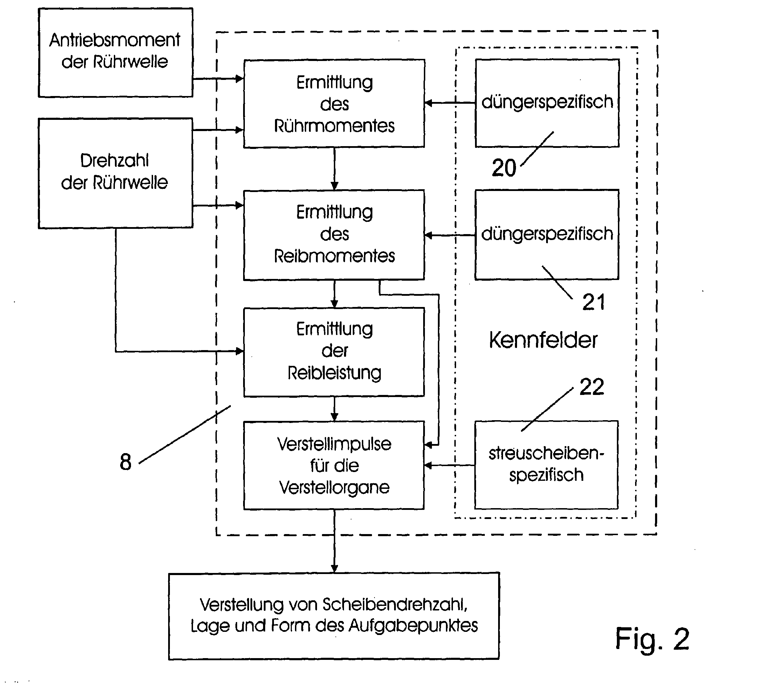

Hierbei ist in Fig. 2 die Auswertung und der Verlauf von der Ermittlung des Drehmomentes bis zur Einstellung des Düngerstreuers in einem Flussdiagramm dargestellt.

### Die Funktionsweise ist folgende:

In dem Bordrechner 8 sind verschiedene Kennfelder 20, 21, 22 abgespeichert. Hierbei kann es sich um düngerspezifische Reibmomente, düngerspezifische Rührmomente und streuscheibenspezifische Einstellwerte handeln. Mittels des Sensors der Drehmomentmesseinrichtung 19 wird das Antriebsmoment an der Rührwelle 12 ermittelt. Mittels des Drehzahlsensors 18 wird die aktuelle Drehzahl aufgenommen. Aus diesen Werten wird in Verbindung mit dem düngerspezifischen Kennfeld 20, welches in dem Speichermedium des Bordrechners 8 abgespeichert ist, dass Rührmoment an der Rührwelle 12 ermittelt. Hieraus lässt sich das Reibmoment zwischen Rührorgan 13 und dem Dünger ermitteln. Hieraus kann die erforderliche Reibleistung ermittelt werden. Aufgrund der ermittelten vorgeschriebenen Daten werden Verstellimpulse für die Verstellorgane der Dosiereinrichtung 5 und der Schleuderscheiben 10 errechnet. Somit wird dann die Scheibendrehzahl, Lage und Form der Aufgabefläche von dem Bordrechner 8 errechnet und entsprechende Einstellimpulse an die Einstellorgane 7,11 gegeben, um die gewünschte Verteilung zu erreichen.

Somit wird das an der Rührwelle 12 aufzubringende Antriebsmoment gemessen. Mittels der Drehmomentmesseinrichtungen 19 kann für beide Rührorgane 13 oder das jeweilige Antriebsmoment für jedes Rührorgan ermittelt werden.

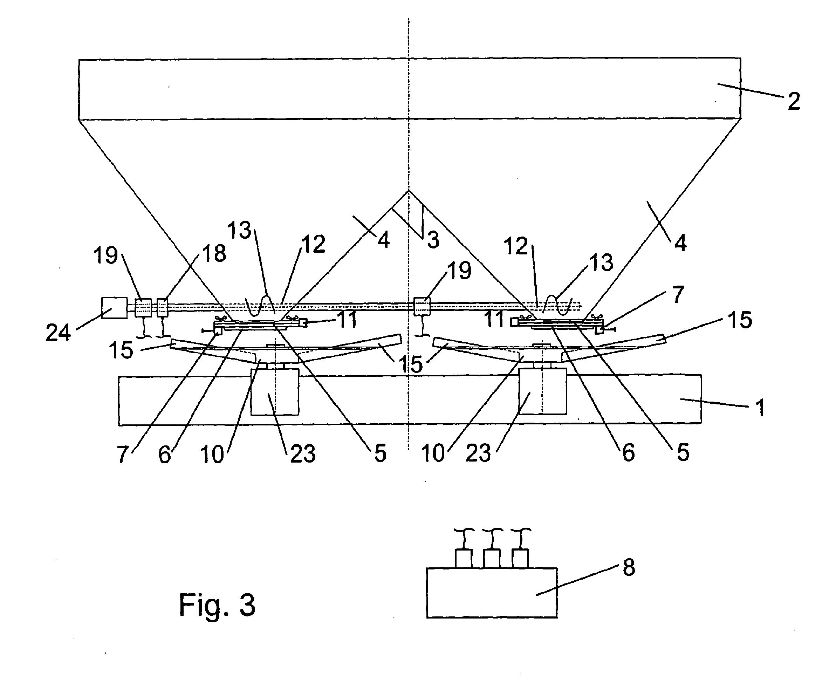

Das Ausführungsbeispiel gemäß Fig. 3 unterscheidet sich dadurch, dass die Schleuderscheiben 10 von hydraulischen Antriebsmotoren 23 und die Rührwelle 12 ebenfalls von einem Hydraulikmotor 24 angetrieben wird. Die Auswertung und Einstellung der Dosierorgane 5 und der Schleuderscheiben 10 erfolgt entsprechend.

Anstelle der automatischen Einstellung der Einstellorgane des Schleuderdüngerstreuers kann auch eine manuelle vorgesehen sein. Hierzu weist die Steuer- und Regeleinrichtung 8 dann ein Anzeigedisplay auf mittels welchem Einstellwerte für den Schleuderdüngersteuer oder einer repräsentativer Wert angezeigt wird. Anhand dieser angezeigten Werte kann dann der Schleuderdüngerstreuer von dem Bediener direkt oder über in einer Tabelle angegebenen Wert eingestellt werden. Auch ist es möglich über ein Beratungsdienst aufgrund des ermittelten und angezeigten Wertes die Einstellung des Schleuderdüngerstreuers zu erfragen.

## Patentansprüche

1. Zentrifugaldüngerstreuer mit einem trichterförmigen Vorratsbehälter, einstellbaren Dosierorganen und unter den Dosierorganen rotierend angetriebenen und mit Wurfschaufeln besetzten Schleuderscheiben, denen über die Dosierorgane in einstellbarer Weise die sich im Vorratsbehälter befindlichen Düngermaterialien zuführbar sind, im Vorratsbehälter oberhalb der Dosierorgane angeordneten und mittels einer Kraftquelle angetriebenen Rührorganen, **dadurch gekennzeichnet, dass** dem Antrieb des Rührorganes oder der Rührorgane (13) eine Kraft- und /oder Drehmomentmesseinrichtung (19) zugeordnet ist, mittels welcher das jeweilige erforderliche Antriebsdrehmoment ermittelbar ist.

2. Zentrifugaldüngerstreuer nach Anspruch 1, **dadurch gekennzeichnet, dass** das Rührorgan (13) zumindest eine Rührwelle (12) aufweist, dass zwischen der Kraftquelle und der Rührwelle (12) die Kraft- und/oder Drehmomentmesseinrichtung (19) angeordnet ist.

3. Zentrifugaldüngerstreuer nach Anspruch 1, **dadurch gekennzeichnet, dass** der das Rührorgan (13) antreibenden Kraftquelle die Kraft- und/oder Drehmomentmesseinrichtung (19) zugeordnet ist.

4. Zentrifugaldüngerstreuer nach Anspruch 1, **dadurch gekennzeichnet, dass** das die Kraft- und/oder Drehmomentmesseinrichtung (19) mit einer elektronischen Auswerteeinrichtung, beispielsweise einem Bordcomputer (8) verbunden ist.

5. Zentrifugaldüngerstreuer nach einem oder mehreren der vorstehenden Ansprüche, **dadurch gekennzeichnet, dass** in einem Speichermedium der Kraft- und/oder Drehmomentmesseinrichtung (19) oder des Bordcomputers (8) ein Auswerteprogramm zur Ermittlung des Drehmomentes hinterlegt ist.

6. Zentrifugaldüngerstreuer nach einem oder mehreren der vorstehenden Ansprüche, **dadurch gekennzeichnet, dass** in dem Bordrechner (8) in einem Speichermedium die Zusammenhänge zwischen Antriebsmoment und Einstellwerten des Düngerstreuers hinterlegt sind und dass anhand dieser Zusammenhänge die Dosierorgane (5) einstellbar sind.

7. Zentrifugaldüngerstreuer nach einem oder mehreren der vorstehenden Ansprüche, **dadurch gekennzeichnet, dass** in dem Speichermedium des Bordrechners (8) die einzelnen Einstellparameter zu verschiedenen Antriebsmomenten abgespeichert sind, dass aufgrund der ermittelten Antriebsmomente die einzelnen Einstellparameter des Düngerstreuers ermittelbar sind und aufgrund der ermittelten Einstellparameter die Einstellorgane (7, 11, 5, 6) des Düngerstreuers von dem Bordrechner (8) ansteuerbar sind.

## Claims

1. Centrifugal fertiliser spreader having a funnel-shaped hopper, adjustable metering members and centrifugal discs, which are driven in a rotating manner underneath the metering members and are provided with throwing vanes, the fertiliser materials that are situated in the hopper being suppliable to the said throwing vanes in an adjustable manner by means of the metering members, the centrifugal fertiliser spreader also having agitating members that are disposed above the metering members in the hopper and are driven through the intermediary of a power source, **characterised in that** a power and/or torque measuring device (19) is associated with the driving means of the agitating member or of the agitating members (13) and the respective driving torque necessary is determinable through the intermediary of the said torque measuring device.

2. Centrifugal fertiliser spreader according to claim 1, **characterised in that** the agitating member (13) includes at least one agitating shaft (12), **in that** the power and/or torque measuring device (19) is disposed between the power source and the agitating shaft (12).

3. Centrifugal fertiliser spreader according to claim 1, **characterised in that** the power and/or torque measuring device (19) is associated with the power source that drives the agitating member (13).

4. Centrifugal fertiliser spreader according to claim 1, **characterised in that** the power and/or torque measuring device (19) is connected to an electronic evaluating device, for example an on-board computer (8).

5. Centrifugal fertiliser spreader according to one or more of the preceding claims, **characterised in that** an evaluating program for determining the torque is stored in a storage medium of the power and/or torque measuring device (19) or of the on-board computer (8).

6. Centrifugal fertiliser spreader according to one or more of the preceding claims, **characterised in that** the interrelationships between torque and control values of the fertiliser spreader are stored in a storage medium in the on-board computer (8) and **in that** the metering members are adjustable by way of these interrelationships.

7. Centrifugal fertiliser spreader according to one or more of the preceding claims, **characterised in that** the individual adjustment parameters for various torques are stored in the storage medium of the on-board computer (8), **in that** the individual adjustment parameters of the fertiliser spreader are determinable on account of the determined torques and the adjustment members (7, 11, 5, 6) of the fertiliser spreader are actuatable by the on-board computer (8) on account of the determined adjustment parameters.

## Revendications

1. Epandeur centrifuge d'engrais comportant un réservoir en forme d'entonnoir, des organes de dosage réglables et sous les organes de dosage, des disques d'épandage entraînés en rotation et équipés de palettes d'éjection, les disques recevant des engrais du réservoir de façon réglable par les organes de dosage, et le réservoir au-dessus des organes de dosage comportant des agitateurs entraînés par une source d'entraînement,
**caractérisé en ce qu'**
une installation de mesure de force et/ou de couple (19) est associée à l'entraînement de l'organe agitateur ou des organes agitateurs (13), pour déterminer le couple moteur nécessaire.

2. Epandeur centrifuge d'engrais selon la revendication 1,
**caractérisé en ce que**
l'organe agitateur (13) comporte au moins un axe d'agitateur (12) et l'installation de mesure de force et/ou de couple (19) est installée entre la source d'entraînement et l'arbre d'agitateur (12).

3. Epandeur centrifuge d'engrais selon la revendication 1,
**caractérisé en ce que**
la source d'entraînement de l'organe agitateur (13) est équipée de l'installation de mesure de force et/ou de couple (19).

4. Epandeur centrifuge d'engrais selon la revendication 1,
**caractérisé en ce que**
l'installation de mesure de force et/ou de couple (19) est reliée à une installation d'exploitation électronique par exemple un ordinateur de bord (8).

5. Epandeur centrifuge d'engrais selon l'une quelconque des revendications précédentes,
**caractérisé en ce qu'**
une mémoire de l'installation de mesure de force et/ou de couple (19) ou encore l'ordinateur de bord (8) comporte un programme d'exploitation pour déterminer le couple.

6. Epandeur centrifuge d'engrais selon l'une quelconque des revendications précédentes,
**caractérisé en ce qu'**
une mémoire de l'ordinateur de bord (8) contient les relations entre le couple d'entraînement et les valeurs de réglage de l'épandeur centrifuge, et ces relations permettent de régler les organes de dosage (5).

7. Epandeur centrifuge d'engrais selon l'une ou plusieurs des revendications précédentes,
**caractérisé en ce que**
la mémoire de l'ordinateur de bord (8) contient les différents paramètres de réglage des différents couples d'entraînement de sorte qu'à partir des couples d'entraînement déterminés, on détermine les différents paramètres de réglage de l'épandeur d'engrais et à l'aide de ces paramètres de réglage ainsi obtenus, on commande les organes de réglage (7, 11, 5, 6) de l'épandeur centrifuge à partir de l'ordinateur de bord (8).
